# EUROPÄISCHE PATENTANMELDUNG

(11) **EP 0 807 561 A2**
(43) Veröffentlichungstag der Anmeldung: **19.11.1997**
(21) Anmeldenummer: 97107763.1
(22) Anmeldetag: 13.05.1997
(51) Int. Cl.: B60T 7/12, B60T 13/22

(54) **Rücklaufsperre für Kraftfahrzeuge**

(30) Priorität: 18.05.1996 DE 19620131
(71) Anmelder: Mack, Jürgen, 88400 Biberach (DE)
(72) Erfinder: Mack, Jürgen, 88400 Biberach (DE)
(74) Vertreter: Engelhardt, Guido, Dipl.-Ing.

(57) **Zusammenfassung**

Bei einer Rücklaufsperre (21) für mit einem Schaltgetriebe (4) versehene Kraftfahrzeuge (1) ist auf einer Getriebewelle (5) des Schaltgetriebes (4) eine Freilaufeinrichtung (23) angeordnet, deren inneres Bauteil (24) fest mit der Getriebewelle (5) und deren äußeres Bauteil (25) über eine lösbare Reibungskupplung (31) an dem Gehäuse (7) des Schaltgetriebes (4) abgestützt ist. Des weiteren ist zum Lösen der durch die Kraft von Federn (45) beaufschlagten Reibungskupplung (31) ein durch Druckmittel betätigbares Verstellglied (41) vorgesehen, das an den Bremskreislauf (11) angeschlossen ist und bei Beaufschlagung auf die Federn (45), um die Rücklaufsperre (21) zu lösen, einwirkt.

Durch die Rücklaufsperre (21) ist es somit möglich, jedes Kraftfahrzeug an einer Steigung anzufahren, ohne daß dieses zurückrollt. Beim Lösen der Betriebsbremse des Kraftfahrzeuges (1) wird nämlich die Getriebewelle (5) in der der Vorwärtsfahrt entgegengesetzten Drehrichtung selbsttätig blockiert.

## Beschreibung

Die Erfindung bezieht sich auf eine Rücklaufsperre für mit einem Schaltgetriebe versehene Kraftfahrzeuge.

Automatische Getriebe für Kraftfahrzeuge sind vielfach mit unterschiedlich ausgebildeten Klinkenvorrichtungen versehen, um z. B. in der Schaltstellung 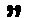 Parken" Getriebeteile mittels Klinken zu blockieren und somit ein unbeabsichtigtes Verfahren des Kraftfahrzeuges zu verhindern. Bei mit einem Schaltgetriebe ausgestatteten Kraftfahrzeugen sind derartige Vorrichtungen nicht vorgesehen, vielmehr muß das Kraftfahrzeug zu dem gleichen Zweck gebremst werden. Das Anfahren eines durch die Hand- oder Fußbremse gegen Zurückrollen gesicherten Kraftfahrzeuges an einer Steigung ist aber mit erheblichen Schwierigkeiten verbunden, da das Lösen der Bremsen und das Anfahren, d. h. das Einkuppeln und das Gasgeben, aufeinander abgestimmt werden müssen. Vor allem bei Lastkraftwagen und Omnibussen, die eine hohe Gewichtskraft aufweisen und somit ein hohes Anfahrmoment zur Verfügung stehen muß, ist dies nur von geübten Fahrern, ohne daß dabei der Antriebsmotor stillgesetzt wird, zu bewerkstelligen.

Aufgabe der Erfindung ist es daher, eine Rücklaufsperre für mit einem Schaltgetriebe versehene Kraftfahrzeuge zu schaffen, mittels der es möglich ist, jedes Kraftfahrzeug an einer Steigung anzufahren, ohne daß dieses dabei zurückrollt, vielmehr soll erreicht werden, daß beim Lösen der Betriebsbremse des Kraftfahrzeuges die Getriebewelle des Schaltgetriebes in der der Vorwärtsfahrt entgegengesetzten Drehrichtung selbsttätig blockiert ist, so daß ein Zurückrollen ausgeschlossen ist und in der üblichen Weise ohne Schwierigkeiten angefahren werden kann. Der dazu erforderliche Bauaufwand soll gering gehalten werden, dennoch soll eine hohe Betriebssicherheit sowie eine einfache Handhabung gegeben sein.

Gemäß der Erfindung wird dies dadurch erreicht, daß auf einer mit einem Antriebsmotor des Kraftfahrzeuges kuppelbaren Getriebewelle eine mit zwischen zwei Bauteilen eingesetzte Wälzkörper versehene Freilaufeinrichtung angeordnet ist, deren inneres Baute fest mit der Gebriebewelle verbunden und deren äußeres Bauteil über eine lösbare Reibungskupplung an dem Gehäuse des Schaltgetriebes unmittelbar oder über Zwischenglieder abgestützt ist, und daß zum Lösen der durch die Kraft von Federn beaufschlagten Reibungskupplung ein durch Druckmittel betätigbares Verstellglied vorgesehen ist, das an den Bremskreislauf des Kraftfahrzeuges angeschlossen ist und bei Beaufschlagung auf die Federn einwirkt.

Zweckmäßig ist es hierbei, die der Freilaufeinrichtung zugeordnete Reibungskupplung als Konuskupplung, vorzugsweise mit zwei beidseitig der Wälzkörper vorgesehenen an dem äußeren Bauteil angearbeiteten Reibflächen auszubilden, die mit in einem fest mit dem Gehäuse des Getriebes verbundenen Ummantelung der Rücklaufsperre abgestützten Reibringen zusammenwirken, und die auf die Reibungskupplung einwirkenden Federn als durch axial neben einem der Reibringe, vorzugsweise konzentrisch zur Getriebewelle, angeordnete Tellerfedern auszugestalten, die an der Ummantelung der Rücklaufsperre abgestützt sind.

Das Verstellglied kann aus einem auf einem in der Ummantelung der Rücklaufsperre ortsfest gehaltenen im Querschnitt vorzugsweise T-förmig ausgebildeten Einsatzstück verschiebbar angeordneten Kolben bestehen, der mit dem Einsatzstück einen an den Bremskreislauf des Kraftfahrzeuges angeschlossenen Druckraum einschließt und bei Beaufschlagung über einen Ring oder einen angeformten Bund auf die Tellerfedern einwirkt, wobei das Verstellglied z. B. mittels eines Bolzens oder dgl. verdrehfest an der Ummantelung der Rücklaufsperre abgestützt und der dem Verstellglied zugeordnete Druckraum über in das Einsatzstück eingearbeitete Druckmittelkanäle an den Hydraulikkreislauf angeschlossen sein sollte.

Angebracht ist es ferner, die Rücklaufsperre auf der die Getriebewelle mit der die Abtriebswelle des Antriebsmotors verbindenden Kupplung abgewandten Seite konzentrisch zu der Getriebewelle an dem Gehäuse des Schaltgetriebes anzuordnen.

Wird eine Rücklaufsperre gemäß der Erfindung ausgebildet, so ist es möglich, auch mit einem Schaltgetriebe versehene Kraftfahrzeuge an einer Steigung, unabhängig von der Betriebsbremse, zuverlässig gegen ein ungewolltes Zurückrollen, insbesondere beim Anfahren, zu sichern. Durch die selbsttätig schließende Rückfahrsperre ist nämlich gewährleistet, daß das Kraftfahrzeug nur in Vorwärtsfahrtrichtung bewegt werden kann, in der der entgegengesetzten Fahrtrichtung zugeordneten Drehrichtung ist vielmehr die Getriebewelle drehfest abgestützt. Ein Zurückrollen ist somit, sobald die Betriebsbremse nicht mehr wirksam ist, ausgeschlossen. Und da zum Anfahren nur das Kupplungs- und das Gaspedal zu betätigen sind, können selbst Lastkraftwagen und Omnibusse mit der vorschlagsgemäß ausgebildeten Rücklaufsperre an Steigungen, und zwar auch von ungeübten Fahrern, ohne Schwierigkeiten in Gang gesetzt werden. Mit Hilfe einer derartigen Rücklaufsperre wird demnach das Anfahren eines Kraftfahrzeuges in einem erheblichen Maße erleichtert.

In der Zeichnung ist ein Ausführungsbeispiel einer gemäß der Erfindung ausgebildeten Rücklaufsperre für mit einem Schaltgetriebe versehene Kraftfahrzeuge dargestellt, das nachfolgend im einzelnen erläutert ist. Hierbei zeigt:
- Figur 1: ein ein Schaltgetriebe, das mit einer Rücklaufsperre versehen ist, aufweisendes Kraftfahrzeug, in einer schematischen Darstellung, und
- Figur 2: die bei dem Schaltgetriebe nach Figur 1 angebrachte Rücklaufsperre, in einer vergrößerten Darstellung und in einem Axialschnitt.

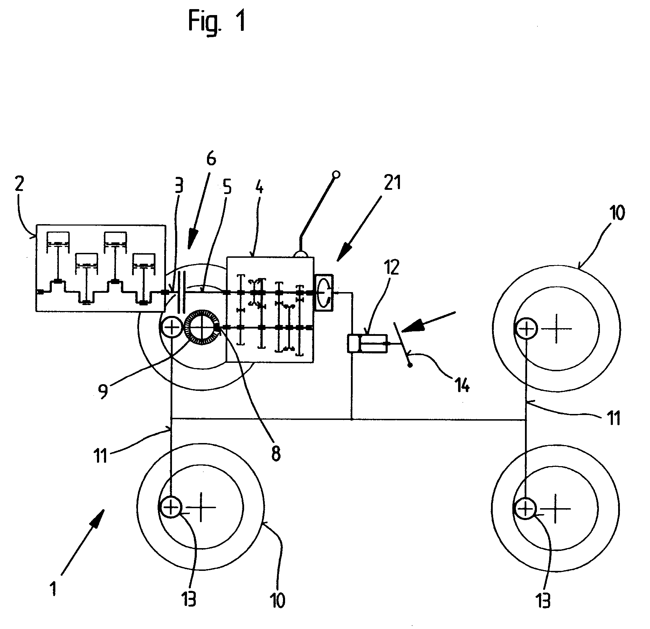

Das in Figur 1 schematisch dargestellte und mit 1 bezeichnete Kraftfahrzeug weist einen Antriebsmotor 2 auf, dessen Abtriebswelle 3 über eine Kupplung 6 mit einer Getriebewelle 5 eines mehrere Gangstufen aufweisenden Schaltgetriebes 4 kraftschlüssig verbindbar ist. Die Getriebeausgangswelle 8 des Schaltgetriebes 4 ist trieblich mit einer Radachse 9 verbunden, auf der zwei der vier Fahrzeugräder 10 angeordnet sind. Den Rädern 10 sind Radbremszylinder 13 zugeordnet, die an einen gemeinsamen mit einem Hauptbremszylinder 12 versehenen Bremskreislauf 11 angeschlossen sind. Mit Hilfe eines dem Hauptbremszylinder 12 zugeordneten Bremspedals 14 können die Radbremszylinder 13 stillgesetzt werden.

Um z. B. an einer Steigung ein ungewolltes Zurückrollen des Kraftfahrzeuges 1 zuverlässig zu vermeiden, ist die Getriebewelle 5 mit einer selbsttätig wirkenden Rückfahrsperre 21 versehen, die auf der der Kupplung 6 gegenüberliegenden Seite an dem Gehäuse 7 des Schaltgetriebes 4 angebracht ist und nur durch Betätigen des Bremspedals 14 außer Betrieb genommen werden kann. Die Rücklaufsperre 21 bewirkt hierbei, daß die Getriebewelle 5 nur in der der Vorwärtsfahrt des Kraftfahrzeuges 1 zugeordneten Drehrichtung frei drehbar ist, in entgegengesetzter Drehrichtung ist dagegen die Getriebewelle 5 bei nicht betätigtem Bremspedal 14 selbsttätig blockiert.

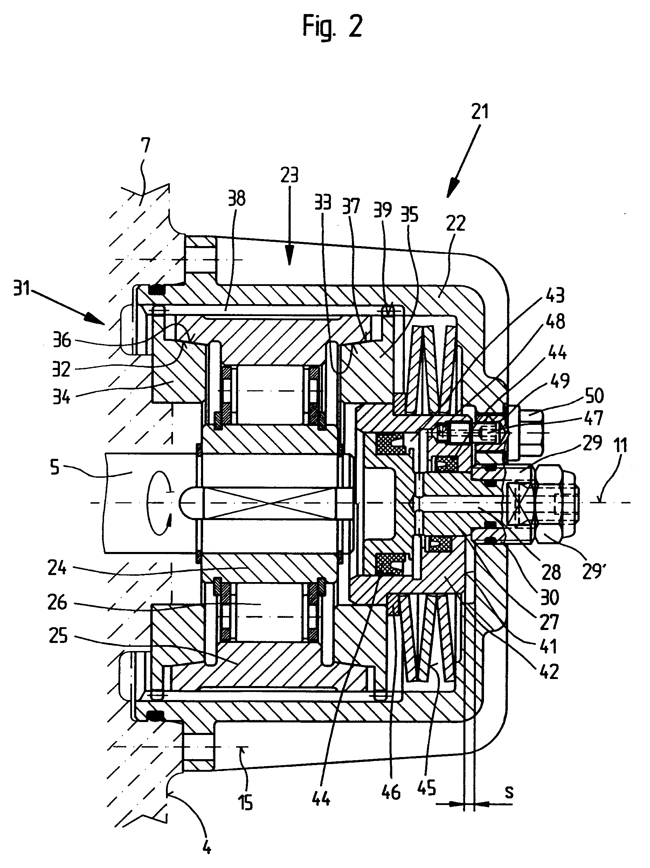

Die mit einer Ummantelung 22 versehene Rücklaufsperre 21 besteht, wie dies insbesondere der Figur 2 zu entnehmen ist, im wesentlichen aus einer handelsüblichen Freilaufeinrichtung 23, einer durch die Kraft von Tellerfedern 45 beaufschlagten Reibungskupplung 31 sowie einem Verstellglied 41, mittels dem die Reibungskupplung 31 beim Betätigen des Bremspedals 14 zu öffnen ist. Dazu ist dem Verstellglied 41, das als Kolben 42 ausgebildet ist, ein Druckraum 43 zugeordnet, der von dem Verstellglied 41 und einem in die Ummantelung 22 der Rücklaufsperre 21 eingesetzten Einsatzstück 27 eingeschlossen ist und über in dieses eingearbeitete Kanäle 28 mit dem Bremskreislauf 11 in Verbindung steht Mittels Dichtungen 44 ist der Druckraum 43 flüssigkeitsdicht abgedichtet.

Die Freilaufeinrichtung 23 weist ein inneres Bauteil 24 sowie ein äußeres Bauteil 25 auf, zwischen denen Wälzkörper 26 eingesetzt sind. Das innere Bauteil 24 ist mit der Getriebewelle 5 drehfest verbunden, das äußere Bauteil 25 ist dagegen mit zwei beidseitig der Wälzkörper 26 vorgesehenen konischen Reibflächen 32 und 33 ausgestattet, die zusammen mit Reibringen 34 und 35, an denen ebenfalls Reibflächen 36 und 37 angearbeitet sind, die Reibungskupplung 31 bilden. Mittels an den Reibringen 34 und 35 vorgesehenen Verzahnungen 39 sind diese an einer in die Ummantelung 22 eingearbeiteten Verzahnung 38 abgestützt.

Das Verstellglied 41 ist mittels eines in dieses eingeschraubten Stiftes 47, der in eine in der Ummantelung 22 vorgesehenen Gewindebohrung 49 gehaltenen Schraube 50 verschiebbar geführt ist, gegen Verdrehung gesichert. Außerdem wird durch den Stift 47 eine in den Druckraum 43 mündende Entlüftungsbohrung 48 verschlossen. Das Einsatzstück 27, auf dem das Verstellglied 41 verschiebbar geführt ist, ist in einer Mutter 29 gehalten, die ebenfalls in eine in die Ummantelung 22 fluchtend zu der Getriebewelle 5 eingearbeiteten Gewindebohrung 30 eingeschraubt ist. Durch eine auf das Einsatzstück 27 aufgeschraubte Kontermutter 29' ist dieses axial arretiert.

Durch die Kraft der Tellerfedern 45, die über einen auf das Verstellglied 41 aufgesetzten Ring 46 auf den Reibring 35 einwirken, ist die Reibungskupplung 31, die auch als Lamellenkupplung ausgebildet sein kann, nahezu ständig geschlossen, so daß das äußere Bauteil 25 der Freilaufeinrichtung 23 über die Reibringe 34 und 35 an der Ummantelung 22, die mittels Schrauben 15 fest mit dem Gehäuse 7 des Schaltgetriebes 4 verbunden ist, feststeht. Die Getriebewelle kann somit nur in einer Drehrichtung, die der Vorwärtsfahrt des Kraftfahrzeuges 1 zugeordnet ist, verdreht werden. Bei Stillstand des Kraftfahrzeuges 1 an einer Steigung wird demnach ein Zurückrollen durch die Rücklaufsperre 21 zuverlässig verhindert.

Wird jedoch das Bremspedal 14 betätigt, so wird, da die Rücklaufsperre 21 an den Bremskreislauf 11 des Kraftfahrzeuges 1 angeschlossen ist, in dem Druckraum 43 wie auch in den Radbremszylindern 13 wird Druck aufgebaut und das Verstellglied 41 wird dadurch um den Verstellweg s entgegen der Kraft der Tellerfedern 45 nach rechts verschoben. Über den Ring 46 werden dabei die Tellerfedern 45 zusammengedrückt, so daß deren Kraft nicht mehr auf den Reibring 35 einwirkt und die Reibungskupplung 31 und damit auch die Rücklaufsperre 21 gelöst sind. Bei mittels des Hauptbremszylinders 12 gebremstem Kraftfahrzeug 1 kann somit ohne Schwierigkeiten gegebenenfalls ein Gangwechsel vorgenommen werden, in dem z. B. auch ein Rückwärtsgang eingelegt wird. Wird sodann das Bremspedal 12 nicht mehr betätigt, die Kupplung 6 aber weiterhin offen gehalten, rollt das Kraftfahrzeug 1 dennoch nicht zurück, da die Getriebewelle 5 und damit die Antriebsachse 9 durch die Rücklaufsperre 21 in der dem Zurückrollen zugeordneten Drehrichtung blockiert sind. Durch Schließen der Kupplung 6 und Gasgeben kann in diesem Betriebszustand der Rücklaufsperre 21 das Kraftfahrzeug 1 ohne Schwierigkeiten und ohne daß dazu besonderes Geschick erforderlich ist auch an einer Steigung in Gang gesetzt werden.

## Patentansprüche

1. Rücklaufsperre (21) für mit einem Schaltgetriebe (4) versehene Kraftfahrzeuge (1),
**dadurch gekennzeichnet,**
daß auf einer mit einem Antriebsmotor (2) des Kraftfahrzeuges (1) kuppelbaren Getriebewelle (5) eine mit zwischen zwei Bauteilen (24, 25) eingesetzte Wälzkörper (26) versehene Freilaufeinrichtung (23) angeordnet ist, deren inneres Bauteil (24) fest mit der Gebriebewelle (5) verbunden und deren äußeres Bauteil (25) über eine lösbare Reibungskupplung (31) an dem Gehäuse (7) des Schaltgetriebes (4) unmittelbar oder über Zwischenglieder abgestützt ist, und daß zum Lösen der durch die Kraft von Federn (45) beaufschlagten Reibungskupplung (31) ein durch Druckmittel betätigbares Verstellglied (41) vorgesehen ist, das an den Bremskreislauf (11) des Kraftfahrzeuges (1) angeschlossen ist und bei Beaufschlagung auf die Federn (45) einwirkt.

2. Rücklaufsperre nach Anspruch 1,
**dadurch gekennzeichnet,**
daß die der Freilaufeinrichtung (23) zugeordnete Reibungskupplung (31) als Konuskupplung, vorzugsweise mit zwei beidseitig der Wälzkörper (26) vorgesehenen an dem äußeren Baute (25) angearbeiteten Reibflächen (36, 37) ausgebildet ist, die mit in einem fest mit dem Gehäuse (7) des Getriebes (4) verbundenen Ummantelung (22) der Rücklaufsperre (21) abgestützten Reibringen (34, 35) zusammenwirken.

3. Rücklaufsperre nach Anspruch 1 oder 2,
**dadurch gekennzeichnet,**
daß die auf die Reibungskupplung (31) einwirkenden Federn durch axial neben einem der Reibringe(35) , vorzugsweise konzentrisch zur Getriebewelle (5), angeordnete Tellerfedern (45) gebildet sind, die an der Ummantelung (22) der Rücklaufsperre (21) abgestützt sind.

4. Rücklaufsperre nach einem oder mehreren der Ansprüche 1 bis 3,
**dadurch gekennzeichnet,**
daß das Verstellglied (41) aus einem auf einem in der Ummantelung (22) der Rücklaufsperre (21) ortsfest gehaltenen im Querschnitt vorzugsweise T-förmig ausgebildeten Einsatzstück (27) verschiebbar angeordneten Kolben (42) besteht, der mit dem Einsatzstück (27) einen an den Bremskreislauf (11) des Kraftfahrzeuges (1) angeschlossenen Druckraum (43) einschließt und bei Beaufschlagung über einen Ring(46) oder einen angeformten Bund auf die Tellerfedern (45) einwirkt.

5. Rücklaufsperre nach Anspruch 4,
**dadurch gekennzeichnet,**
daß das Verstellglied (41) z.B. mittels eines Bolzens (47) oder dgl. verdrehfest an der Ummantelung (22) der Rücklaufsperre (21) abgestützt ist.

6. Rücklaufsperre nach Anspruch 4 oder 5,
**dadurch gekennzeichnet,**
daß der dem Verstellglied (41) zugeordnete Druckraum (43) über in das Einsatzstück (27) eingearbeitete Druckmittelkanäle (28) an den Hydraulikkreislauf (11) angeschlossen ist.

7. Rücklaufsperre nach einem oder mehreren der Ansprüche 1 bis 6,
**dadurch gekennzeichnet,**
daß die Rücklaufsperre (21) auf der die Getriebewelle (5) mit der die Abtriebswelle (3) des Antriebsmotors (2) verbindenden Kupplung (6) abgewandten Seite konzentrisch zu der Getriebewelle (5) an dem Gehäuse (7) des Schaltgetriebes (4) angeordnet ist.
